# EUROPÄISCHE PATENTSCHRIFT

(11) **EP 0 817 731 B1**
(45) Veröffentlichungstag und Bekanntmachung des Hinweises auf die Patenterteilung: **16.12.1998**
(21) Anmeldenummer: 96907306.3
(22) Anmeldetag: 25.03.1996
(51) Int. Cl.: B60N 2/22

(54) **VERSTELLBARE, QUER GETEILTE RÜCKENLEHNE FÜR EINEN FAHRZEUGSITZ**
ADJUSTABLE, TRANSVERSELY DIVIDED BACK FOR A VEHICLE SEAT
DOSSIER REGLABLE A DIVISION TRANSVERSALE POUR SIEGE DE VEHICULE

(30) Priorität: 31.03.1995 DE 19512012
(43) Veröffentlichungstag der Anmeldung: 14.01.1998
(73) Patentinhaber: Brose Fahrzeugteile GmbH & Co. KG, 96450 Coburg (DE)
(72) Erfinder: SZERDAHELYI, Ferenc, D-96450 Coburg (DE); PLEISS, Eberhard, D-96253 Untersiemau (DE)
(74) Vertreter: Müller, Wolfram Hubertus, Dipl.-Phys.
(86) Internationale Anmeldenummer: DE9600554
(87) Internationale Veröffentlichungsnummer: WO9630228

(56) Entgegenhaltungen:
- EP-A- 0 353 210
- DE-A- 3 704 489
- DE-A- 3 824 730
- DE-U- 9 407 773
- FR-A- 1 396 937
- FR-A- 2 561 182
- GB-A- 1 229 947
- US-A- 2 685 327
- PATENT ABSTRACTS OF JAPAN Bd. 018, Nr. 319 (M-1623) 17 Juni 1994 & JP,A,06 072 200 (IKEDA BUSSAN CO LTD) 15 März 1994

## Beschreibung

Die Erfindung betrifft eine verstellbare, quer geteilte Rückenlehne für einen Fahrzeugsitz gemäß dem Oberbegriff des Patentanspruchs 1.

Aus der DE 23704489 C1 ist ein Fahrzeugsitz mit einem am Sitzkissen schwenkbar gelagerten unteren Rückenkissenabschnitt bekannt, an den sich ein höhenverstellbarer oberer Rückenkissenabschnitt anschließt. In jedem Randbereich ist eine Zahnstange vorgesehen, die mit einem ortsfest gelagerten Zahnrad eines Antriebes kämmt und von einem Faltenbalg abgedeckt ist.

Dieser Fahrzeugsitz erlaubt zwar eine Anpassung der Höhe der Rückenlehne an die Größe des Benutzers ergibt jedoch bei zunehmender Rückenlehnenhöhe einen größer werdenden Spalt zwischen dem unteren und oberen Rückenkissenabschnitt frei. Dadurch geht in diesem Bereich die Abstützung der Wirbelsäule des Benutzers verloren.

Die JP-A 6-72200 beschreibt einen Fahrzeugsitz, dessen Rückenlehne aus einem äußeren rahmenartigen Teil und einem inneren, mit einem verstellbaren Sitzkissen verbundenen Teil besteht, wobei dieses Teil auch mit dem äußeren rahmenartigen Teil über seitlich angeordnete Längsführungen in Verbindung steht. Bei einer Vorverlagerung des Sitzkissens wird das innere Lehnenteil mitgeschleppt. Gleichzeitig bildet sich dabei ein querverlaufender Spalt in der Rückenlehne, was zu einer verminderten Abstützfähigkeit der Wirbelsäule führt. Am oberen Ende des äußeren rahmenartigen Lehnenteils sind Führungen zur Aufnahme einer separaten Kopfstütze vorgesehen.

Aus der JP-B2 6-4044 ist eine dreigliedrige Rückenlehne eines Fahrzeugsitzes bekannt, die aus einem unteren am Sitzuntergestell gelagerten Lehnenteil und einem oberen Lehnenteil besteht, deren Schwenkachse im oberen Bereich des unteren Lehnenteils angeordnet ist. Im oberen Bereich des oberen Lehnenteils lagert wiederum die Schwenkachse der Kopfstütze.

Jedes der drei Lehnenteile läßt sich unabhängig vom anderen einstellen, so daß - in gewissen Grenzen - die Form und Lage der Rückenlehne nahezu beliebig gestaltet werden kann.

Da aber keine Höhenverstellung der Rückenlehne oder von Lehnenteilen möglich ist, kann eine Anpassung an verschiedene Körpergrößen der Benutzer nicht vorgenommen werden.

Ein Fahrzeugsitz für Arbeitsfahrzeuge ist in der DE-A1 38 24 730 beschrieben. Er besteht aus einem starren Rahmen, an dem die gepolsterten Sitzelemente kippbar, jedoch nicht verschiebbar gelagert sind. Die Rückenlehne, die wegen des starren Rahmens nicht als Ganzes geschwenkt werden kann, besteht im wesentlichen aus zwei Teilen: einer unteren Lendenstütze, die in einem sitzkissenseitigen Drehlager am Rahmen befestigt und mit ihrem freien oberen Ende am sich daran anschließenden oberen Lehnenteil abstützt. Die Polsterelemente des oberen Lehnenteils sind an einer U-Schiene befestigt, die von einem rückseitig am Rahmen angeschlagenen Lager in einen zweiarmigen Hebel geteilt ist. Bei einer nach hinten gerichteten Schwenkbewegung des oberen Lehnenteils drückt der untere Hebelarm der U-Schiene gegen die sich daran abstützende Lendenstütze, so daß sie eine Vorverlagerung erfährt.

Abgesehen davon, daß die Rückenlehne nicht als Ganzes geschwenkt werden kann, besteht auch nicht die Möglichkeit einer Höhenverstellung. Für Benutzer, deren Rückenlänge nicht ideal mit der starren Schwenkachse des oberen Lehnenteils übereinstimmt, kann der beschriebene Sitz zu ergonomischen Fehlhaltungen des Benutzers führen.

Aus der FR-A1 2 561 182 ist ein Fahrzeugsitz mit einer dreiteiligen Rückenlehne bekannt, die insgesamt und relativ zueinander höhenverstellbar sind. Ein unteres Lehnenteil der Lendenwirbelabstützung, das mittlere Lehnenteil der Schulterabstützung und das obere Lehnenteil repräsentiert die Kopfstütze. Ein Verschwenken der drei Lehnenteile zueinander ist nicht möglich.

Der vorstehend beschriebene Fahrzeugsitz läßt sich zwar individuell an die physiologischen Gegebenheiten eines Rückens eines Benutzers anpassen, es sind jedoch keine Mittel vorgesehen, die eine Veränderung der Winkelstellung zwischen dem oberen und dem mittleren Lehnenteil erlauben würden. Somit ist eine Anpassung der Stützkurve der Rückenlehne an unterschiedliche bzw. sich verändernde Bedürfnisse nicht möglich. Dies kann zu einer vorzeitigen Ermüdung des Benutzers führen.

Die gattungsbildende US-PS 2,685,327 beschreibt eine zweiteilige Rückenlehne für einen Fahrzeugsitz mit einem unteren Lehnenteil, das an einem Sitzuntergestell schwenkbar gelagert ist, und mit einem oberen Lehnenteil, das im Bereich der Wirbelsäule eine nach unten offene Ausnehmung aufweist, in die das untere Lehnenteil eingreift. Dabei ist das obere Lehnenteil über eine Halteplatte an dem Sitzuntergestell befestigt und nimmt Verstellelemente auf, mittels derer das untere Lehnenteil verschwenkt werden kann.

Dieser Fahrzeugsitz ermöglicht zwar eine individuelle Anpassung des zentralen, unteren Sitzbereichs an unterschiedliche Personen; er gestattet jedoch keine entsprechende Anpassung der Sitzbereiche, die zur Abstützung von Kopf und Schultern dienen.

Ein weiterer Fahrzeugsitz mit zweiteiliger Rückenlehne ist aus der EP-A-0 353 210 bekannt, deren oberes Lehnenteil gegenüber dem unteren Lehnenteil Verschwenkbar und höhenverstellbar ist.

Der Erfindung liegt die Aufgabe zugrunde, einen Fahrzeugsitz zu entwickeln, der durch eine gute Anpaßbarkeit an die Bedürfnisse des Benutzers einen großen Komfort bietet. Dies soll ermöglicht werden bei gleichzeitig einfachem Aufbau der Rückenlehne sowie einfacher Einstellbarkeit.

Erfindungsgemäß wird die Aufgabe durch die Merkmale des kennzeichnenden Teils des Patentanspruchs 1 gelöst. Die Unteransprüche geben bevorzugte Varianten der Erfindung wieder.

So besitzt die erfindungsgemäß geteilte Rückenlehne ein gegenüber dem unteren Lehnenteil sowohl höhenverstellbares als auch schwenkbar ausgebildetes Lehnenteil, in das die Bereiche der Schulterabstützung und der Kopfstütze integriert sind. Die Schwenkachse liegt im Bereich der Schulterabstützung des oberen Lehnenteils, insbesondere nahe des unteren Randes des oberen Lehnenteils. Das obere Lehnenteil ist hutförmig ausgebildet und weist eine zentrale, nach unten offene Ausnehmung auf. In der untersten Verstellposition des oberen Lehnenteils wird diese Ausnehmung vollständig von einer nach oben gerichteten Fortsetzung des unteren Lehnenteils ausgefüllt. Die Länge der Fortsetzung sollte so gewählt sein, daß sie auch noch einem verhältnismäßig großen Benutzer als Wirbelabstützung dienen kann. Zweckmäßigerweise wird die Lage der Fortsetzung bzw. die Tiefe der passfähigen Ausnehmung im oberen Lehnenteil annäherend dem vorgesehenen maximalen Höhenverstellweg entsprechen.

Durch die Erfindung gelingt es, mit einer nur zweiteiligen Rückenlehne eine optimale Anpassung an unterschiedliche Bedürfnisse zu realisieren, wobei die einfache Einstellbarkeit nicht nur den Komfort sondern auch die passive Sicherheit des Sitzes unterstützt. Schließlich erfolgt mit der Anpassung des Fahrzeugsitzes an die Körpergröße des Benutzers auch automatisch die richtige Einstellung des integrierten Kopfstützenbereichs. Im umgekehrten Falle, wenn primär der Kopfstützenbereich des oberen Lehnenteils in die richtige Position verschoben wird, nimmt automatisch der Bereich der Schulterabstützung eine angemessene Position ein, was den Sitzkomfort verbessert. Im unteren Bereich der Wirbelsäule bietet das untere Lehnenteil eine hinreichende Abstützung.

Eine weitere Vorzugsvariante verwendet gebogene Führungsstangen für die Höhenverstellung des oberen Lehnenteils. Dadurch wird bei einer Vergößerung der Lehnenhöhe die konkave Kontur der Rückenlehne fortgesetzt, so daß sie sich in idealer Weise der im wesentlich konvex geformten Kontur des Rückens des Benutzers anpaßt.

Eine letztlich ideale Neigungsanpassung des oberen Lehnenteils an die persönlichen Wünsche des Benutzers wird durch die Betätigung eines manuellen oder elektrischen Schwenkantriebes erreicht. Die niedrig gelegte Schwenkachse verhindert, daß zwischen dem oberen Rand des unteren Sitzteils und dem unteren Rand des oberen Sitzteils beim Schwenken in die Extremlagen ein Absatz entsteht, wie dies bei einigen der bekannten Lehnenverstellungen der Fall ist.

Eine besonders vorteilhafte Variante der Erfindung besteht in einer Modulbauweise der Rückenlehne, die sämtliche Verstellmechanismen oberhalb des Sitzkissens in einer vorprüfbaren Einheit zusammenfaßt. Dazu ist ein separater Rahmen vorgesehen, der zum einen die nach oben ragende Fortsetzung des unteren Lehnenteils aufweist und zum anderen an die Holme des unteren Lehnenteils montierbar ist. Dieser separate Rahmen trägt darüber hinaus die Führungsmittel (z.B. Führungsstangen) der Höhenverstellung sowie den zugehörigen Antrieb, der beispielsweise als Zahnstangen- oder Spindelantrieb ausgeführt sein kann. Die über den Rahmen hinausragenden Enden der Führungsstangen sind mit dem Rahmen des oberen Lehnenteils verbunden, der den Verstellmechanismus des Schwenkantriebes trägt.

Eine derart konstruierte Rückenlehne ermöglicht eine effizientere Herstellung des Sitzgestells, da die Sitzvarianten kostengünstiger erzeugt werden können.

Nachfolgend wird die Erfindung anhand eines Ausführungsbeispiels sowie der dargestellten Figuren näher erläutert. Es zeigen :
- Figur 1a -: eine schematische Darstellung der erfindungsgemäßen Rückenlehne, wobei sich das obere Lehnenteil nahe der tiefsten Verstellposition befindet;
- Figur 1b -: wie Figur 1a, wobei sich das obere Lehnenteil in der obersten Verstellposition befindet;
- Figur 2 -: Seitenansicht eines Fahrzeugsitzes mit einer Rückenlehne, deren oberes Lehnenteil in zwei Schwenkpositionen dargestellt ist;
- Figur 3a -: Lehneneinstellung für eine verhältnismäßig kleine Person;
- Figur 3b -: Lehneneinstellung für eine verhältnismäßig große Person;
- Figur 4 -: Frontansicht der ungepolsterten Rahmenbaugruppen des Fahrzeugsitzes.

Gemäß dieser Erfindung ist die Rückenlehne unterhalb des Schulterbereichs quer geteilt, so daß sowohl der Kopfstützenbereich 1a, als auch der Schulterstützenbereich 1b Bestandteil des oberen Lehnenteils 1 sind, wobei das obere Lehnenteil 1 höhenverstellbar und schwenkbar ausgebildet ist.

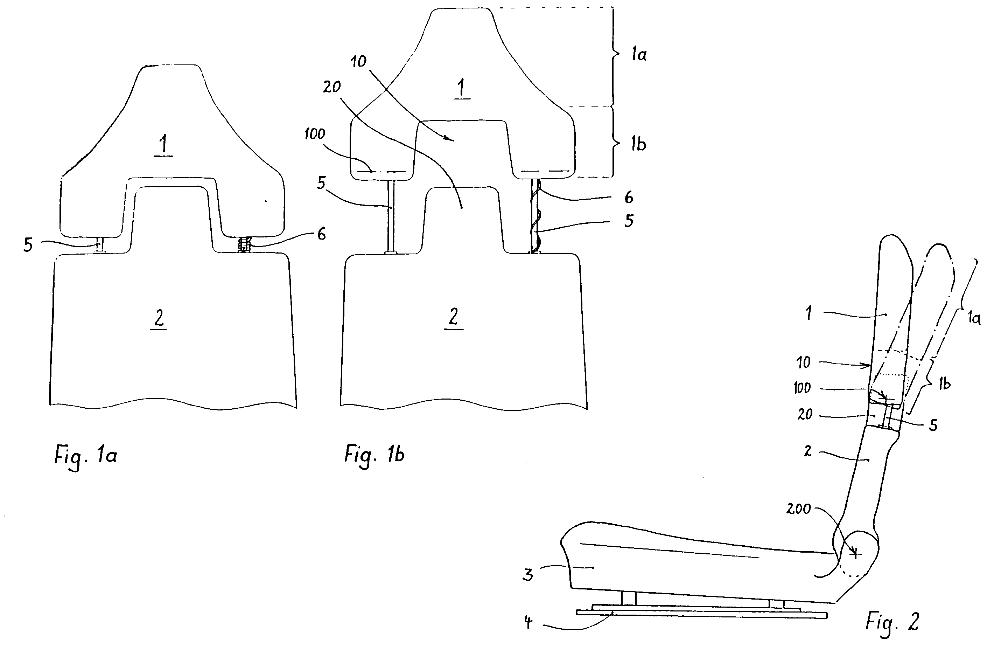

Das in den Figuren 1a und 1b dargestellte Ausführungsbeispiel zeigt schematisch eine Rückenlehne, dessen oberes Lehnenteil 1 sich in zwei verschiedenen Höhenverstellpositionen befindet. Die Querteilung der Rückenlehne erfolgt jedoch nicht durch eine im wesentlichen geradlinige Trennung, sondern derart, daß sich am unteren Lehnenteil 2 mittig eine Fortsetzung 20 ausbildet, die als verlängerte Wirbelsäulenstütze dient. Paßfähig zu dieser Kontur ist der untere Rand des oberen Lehnenteils ausgeformt. Dabei dienen die äußeren Abschnitte im unteren Bereich 1b des oberen Lehnenteils 1 der Abstützung der Schultern eines Benutzers. Der sich nach oben anschließende Abschnitt 1a entspricht der Kopfstütze.

Über zwei verschieblich gelagerte Führungsstangen 5 stehen die beiden Lehnenteile 1,2 verstellbar miteinander in Verbindung. Der Antrieb der Höhenverstellung ist im unteren Lehnenteil 2 untergebracht, im oberen Lehnenteil 1 befindet sich der Antrieb der Schwenkverstellung, die über die elektrische Leitung 6 mit Energie gespeist wird. Natürlich kann das Kabel 6 entgegen der Darstellung in den Figuren 1a und 1b auch durch die Höhlung einer rohrförmigen Führungsstange 5 verlegt werden. Vorzugsweise liegt die Schwenkachse 100 des oberen Lehnenteils 1 nahe des unteren Randes.

Die Seitenansicht des Fahrzeugsitzes gemäß Figur 2 zeigt das obere Lehnenteil 1 in einer mittleren Position der einstellbaren Höhe, wobei der Fortsatz 20 des unteren Lehnenteils 2 in die Ausnehmung 10 des oberen Lehnenteils 1 teilweise eingreift. Mit einer Strich-Punkt-Linie ist eine weit nach hinten verlegte Schwenkposition, ausgeführt um die Schwenkachse 100 gekennzeichnet. Das untere Lehnenteil 2 lagert in der Schwenkachse 200 gelenkig am Untergestell des Sitzkissens 3. Über eine Schienenführung 4 steht der Fahrzeugsitz mit dem Boden längsverschieblich in Verbindung.

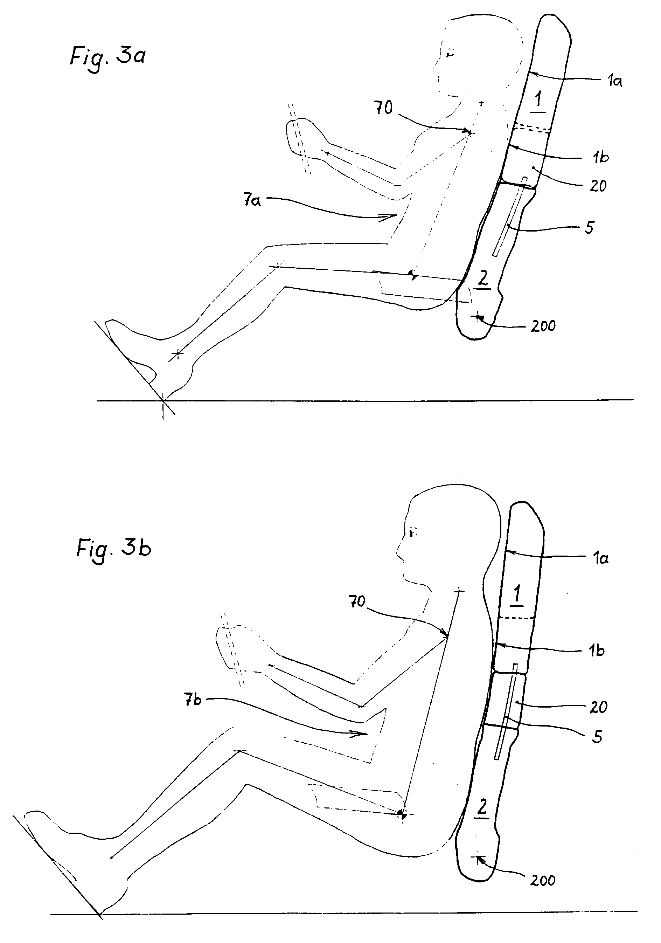

Aus den Figuren 3a und 3b ist der Vorteil der einfachen Einstellbarkeit der erfindungsgemäßen Rückenlehne gut erkennbar. Da der Bereich 1b des oberen Lehnenteils 1 stets dem Schulterbereich (Schultergelenk 70) eines Benutzers 7a, 7b zugeordnet ist, kann er auch speziell an seiner Stützfunktion angepaßt werden. Die Einstellung des oberen Lehnenteils 1 gewährleistet somit die richtige Positionierung sowohl des Schulterstützenbereichs 1b als auch des Kopfstützenbereichs 1a. Gleichzeitig sichert die Fortsetzung 20 am unteren Lehnenteil 2 eine gute Abstützung der Wirbelsäule, auch für einen relativ großen Benutzer 7b.

Eine weitere Anpassung der Rückenlehne an die individuellen Bedürfnisse des Benutzers 7a, 7b kann durch Schwenkbewegungen des oberen Lehnenteils 1 erfolgen, wie bereits im Zusammenhang mit Figur 2 beschrieben. Eine Schwenkbewegung um die Achse 200 erfaßt den gesamten Lehnenkörper.

Durch den Einsatz von gebogenen Führungsstangen 5 kann schon bei der Höhenverstellung des oberen Lehnenteils 1 eine der Schwenkbewegung ähnliche Bewegung ausgelöst werden, die der konvexen Kontur des Rückens eines Benutzers 7a, 7b weitestgehend folgt.

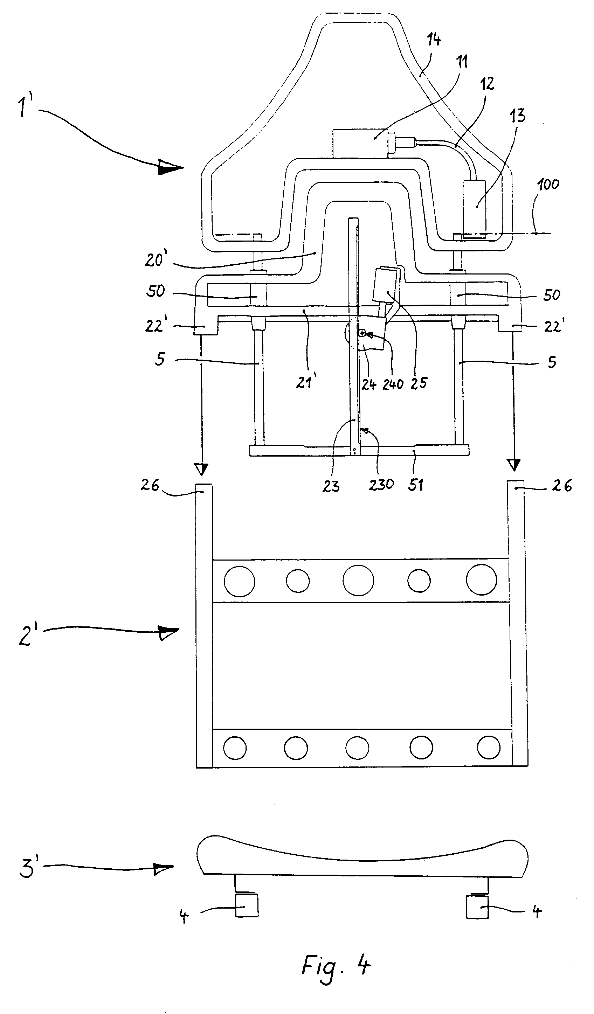

Eine besonders vorteilhafte Variante der Erfindung zeigt Figur 4. Danach ist der Fahrzeugsitz in drei Hauptgruppen unterteilt: In ein Sitzuntergestell 3', einen daran schwenkbar zu lagernden Rahmen 2', der Bestandteil des unteren Lehnenteil 2 ist, und ein Funktionsmodul 1', das - neben dem Rahmen 14 des oberen Lehnenteils 1 und den Rahmenteilen 20',21', 22' des Kopfbereiches des oberen Lehnenteils 2 - auch die Antriebseinheiten, 11,12, 13, bzw. 24, 240, 25 der Höhenverstellung bzw. Schwenkverstellung integriert. Damit ergibt sich eine modulare vorprüfbare Funktionseinheit, die nach Ihrer Anbindung an die freien Enden 26 der vertikalen Holme des Rahmenteils 2' einen kompletten Lehnenrahmen zur Verfügung stellt. Darüber hinaus erlaubt diese Modultechnik eine an die Ausstattungswünsche eines Kunden leicht und kostengünstig anpaßbare Variantengestaltung, zum Beispiel wahlweise den Einsatz manueller oder elektrischer Verstelltechnik.

Das Funktionsmodul 1' weist einen Rahmenabschnitt 20' auf, der für die obere Kontur des unteren Lehnenteils 2 mit der Fortsetzung 20 formgebend ist. Die seitlichen Rahmenabschnitte 22' dienen zur Verbindung des Funktionsmodul 1' an den Rahmen 2' des unteren Lehnenteils 2. Eine Querstrebe 21' verbindet die Rahmenabschnitte 22' miteinander und verleiht der Konstruktion die Stabilität, die zum Tragen des oberen Lehnenteils 1 und der Antriebsteile 23, 24, 25 sowie zum Übertragen der Verstellkräfte notwendig ist.

Im dargestellten Ausführungsbeispiel trägt die Querstrebe 21' eine aus Motor 25 und Getriebe 24 mit Ritzel 240 bestehende Antriebseinheit. Dieses Ritzel 240 kämmt mit der Verzahnung 230 einer in Verschieberichtung des oberen Lehnenteils 1 ausgerichteten Zahnstange 23, die über eine an den unteren Enden der Führungsstangen 5 befestigte Querstrebe 51 in Verbindung steht. Die Rahmenabschnitte 20', 21' tragen Führungshülsen 50, in denen die Führungsstangen 5 verschieblich lagern. Eine weitere zur Höhenverstellung des Lehnenteils 1 geeignete Variante stellt ein Spindelantrieb dar.

Zur Ausführung einer Schwenkbewegung des oberen Lehnenteils 1 um die Achse 100 ist ein Motor 11 vorgesehen, dessen Antriebsenergie über die flexible Welle 12 in das Getriebe 13 geleitet wird. Im Falle eines manuellen Antriebes statt des Elektromotors 11 sollte ein Handrad an geeigneter Stelle positioniert werden.

### Bezugszeichenliste

- 1 -: oberes Lehnenteil
- 1' -: Lehnenmodul
- 1a -: Kopfstützenbereich
- 1b -: Schulterstützenbereich
- 10 -: Ausnehmung des oberen Lehnenteils
- 11 -: Motor
- 12 -: flexible Welle
- 13 -: Getriebe
- 14 -: Rahmen des oberen Lehnenteils
- 100 -: Schwenkachse des oberen Lehnenteils
- 2 -: unteres Lehnenteil
- 2' -: Rahmen des unteren Lehnenteils
- 20 -: Fortsetzung des unteren Lehnenteils/Wirbelsäulenstütze
- 20' -: Rahmen des oberen Bereichs des unteren Lehnenteils
- 21' -: Querstrebe
- 22' -: Befestigungsbereich
- 23 -: Zahnstange
- 24 -: Getriebe
- 25 -: Motor
- 26 -: Befestigungsbereich
- 200 -: Schwenkachse des unteren Lehnenteils
- 230 -: Verzahnung der Zahnstange
- 240 -: Ritzel
- 3 -: Sitzkissen
- 3' -: Rahmen des Sitzkissens
- 4 -: Führungsschiene
- 5 -: Führungsstange
- 50 -: Führungshülse
- 51 -: Querstrebe
- 6 -: Kabel
- 7a -: Benutzer
- 7b -: Benutzer
- 70 -: Schultergelenk

## Patentansprüche

1. Verstellbare, quergeteilte Rückenlehne für einen Fahrzeugsitz, bestehend aus einem unteren Lehnenteil (2), das an einem Sitzuntergestell (3') in einer zur Fahrtrichtung querverlaufenden Achse (200) schwenkbar gelagert ist, und aus einem oberen Lehnenteil (1), in das eine Kopfstütze (1a) sowie eine Schulterabstützung (1b) einstückig integriert sind und das im Bereich der Wirbelsäule eine nach unten offene Ausnehmung (10) aufweist, in die das untere Lehnenteil (2) eingreift,
**dadurch gekennzeichnet**, daß
a) das obere Lehnenteil (1) am unteren Lehnenteil (2) befestigt ist,
b) das obere Lehnenteil (1) gegenüber dem unteren Lehnenteil (2) verschwenkbar und höhenverstellbar ist und
c) eine Fortsetzung (20) des unteren Lehnenteils (2) die Ausnehmung (10) des oberen Lehnenteils (1) weitestgehend ausfüllt, wenn sich das obere Lehnenteil (1) in seiner untersten Verstellposition befindet.

2. Rückenlehne nach Anspruch 1, **dadurch gekennzeichnet**, daß die Länge der Fortsetzung (20) des unteren Lehnenteils (2) und die Tiefe der Ausnehmung (10) des oberen Lehnenteils (1) annähernd dem vorgesehenen maximalen Höhenverstellweg entsprechen.

3. Rückenlehne nach Anspruch 1 oder 2, **dadurch gekennzeichnet**, daß das obere Lehnenteil (1) und das untere Lehnenteil (2) über Führungsstangen (5) miteinander in Verbindung stehen, und daß im unteren Lehnenteil (2) Antriebsmittel (23,24,25) und Führungsmittel (50) zur Höhenverstellung des oberen Lehnenteils (1) angeordnet sind.

4. Rückenlehne nach wenigstens einem der voranstehenden Ansprüche, **dadurch gekennzeichnet**, daß die Führungsstangen (5) in Benutzerrichtung konkav gebogen ausgebildet sind, so daß das obere Lehnenteil (1) bei seiner Verstellung eine Bewegung um einen fiktiven Zentrumspunkt ausführt.

5. Rückenlehne wenigstens einem der voranstehenden Ansprüche, **dadurch gekennzeichnet**, daß im Bereich der Schulterabstützung (1b) des oberen Lehnenteils (1) eine Schwenkachse (100) angeordnet ist, die mit einer Mechanik (13) zur Ausführung einer Schwenkbewegung in Verbindung steht,

6. Rückenlehne nach wenigstens einem der voranstehenden Ansprüche, **dadurch gekennzeichnet**, daß ein Teil (1') der Rückenlehne in Form eines vorprüfbaren Funktionsmoduls aufgebaut ist, das einen das untere Lehnenteil (2) nach oben abschließenden, separat montierbaren Rahmen (20', 21', 22'), Antriebsmittel (23, 24, 25, 240), Führungsmittel (50) und darin geführte Stangen (5) für die Höhenverstellung sowie einen Rahmen (14) des oberen Lehnenteils (1) mit zugehörigen Antriebsmitteln (11,12,13) aufweist.

7. Rückenlehne nach Anspruch 6, **dadurch gekennzeichnet**, daß die Höhenverstellung als Zahnstangengetriebe ausgebildet ist, wobei die Zahnstange (23) über eine Querstrebe (51) mit den Führungsstangen (5) in fester Verbindung steht und während der Verstellbewegung in den inneren Bereich der Fortsetzung (20) des unteren Lehnenteils (2) eintaucht, und daß die Motor-Getriebe-Einheit (25, 24, 240) ortsfest am Rahmen (21') montiert ist.

8. Rückenlehne nach Anspruch 6, **dadurch gekennzeichnet**, daß die Höhenverstellung als Spindelgetriebe ausgebildet ist, wobei mindestens eine Spindel mit den Führungsstangen in fester Verbindung steht und von einer am Rahmen ortsfest gelagerten Motor-Getriebe-Einheit angetrieben wird.

## Claims

1. Adjustable transversely divided backrest for vehicle seat, consisting of a lower backrest part (2), which is mounted on an underframe (3') of the seat to swivel in an axis (200) running across the travel direction, and of an upper backrest part (1) in which a head rest (1a) and a shoulder support (1b) are integrated in one piece and which has in the area of the spinal column a downwardly open recess (10) into which the lower backrest part (2) engages,
characterised in that
a) the upper backrest part (1) is fixed on the lower backrest part (2)
b) the upper backrest part (1) is vertically adjustable and able to swivel relative to the lower backrest part (2) and
c) a projection (20) of the lower backrest part (2) substantially fills out the recess (10) of the upper backrest part (1) when the upper backrest part (1) is located in the lowermost adjusted position.

2. Backrest according to claim 1 characterised in that the length of the projection (20) of the lower backrest part (2) and the depth of the recess (10) of the upper backrest part (1) correspond approximately to the proposed maximum vertical adjustment path.

3. Backrest according to claim 1 or 2 characterised in that the upper backrest part (1) and the lower backrest part (2) are connected together by guide rods (5) and that drive means (23, 24, 25) and guide means (50) are mounted in the lower backrest part (2) for vertically adjusting the upper backrest part (1).

4. Backrest according to at least one of the preceding claims, characterised in that the guide rods (5) are curved concave in the user direction so that the upper backrest part (1) during its displacement executes a movement about an imaginary centre point.

5. Backrest according to at least one of the preceding claims, characterised in that a swivel axis (100) is mounted in the area of the shoulder support (1b) of the upper backrest part (1) and is in connection with a mechanism (13) for executing a swivel movement.

6. Backrest according to at least one of the preceding claims characterised in that a part (1') of the backrest is constructed in the form of a pre-checkable function module which has a separately fitted frame (20',21',22') closing the lower backrest (2) at the top, drive means (23, 24, 25, 240), guide means (50) and rods (5) guided therein for vertical adjustment as well as a frame (14) of the upper backrest part (1) with associated drive means (11,12,13,).

7. Backrest according to claim 6 characterised in that the height adjustment is formed as a toothed rod gear wherein the gear rod (23) is in fixed connection with the guide rods (5) through a transverse strut (51) and during the adjustment movement projects into the inner area of the projection (20) of the lower backrest part (2), and that the motor-gear unit (25, 24, 240) is mounted locally fixed on the frame (21').

8. Backrest according to claim 6 characterised in that the height adjustment is formed as a spindle gear wherein at least one spindle is in fixed connection with the guide rods and is driven by a motor gear unit mounted locally fixed on the frame.

## Revendications

1. Dossier réglable à division transversale pour siège de véhicule automobile, constitué par une partie de dossier inférieur (2), qui est logée de façon pivotante dans une sous structure de dossier (3'), dans un axe (200), s'étendant transversalement par rapport au sens de marche du véhicule, et à partir d'une partie de dossier supérieur (1), dans laquelle est intégré un appui tête (1a), ainsi qu'un repose épaules (1b) monobloc et qui, au niveau de la colonne vertébrale, présente un évidement (10) ouvert vers le bas, dans lequel s'engage la partie de dossier inférieur (2),
caractérisé en ce que,
a) la partie de dossier supérieur (1) est fixée sur la partie de dossier inférieur (2),
b) la partie de dossier supérieur (1) est pivotante par rapport à la partie de dossier inférieur (2), et est réglable en hauteur et,
c) un prolongement (20) de la partie de dossier inférieur (2) rempli l'évidement (10) de la partie de dossier supérieur (1) dans sa majeure partie lorsque la partie de dossier supérieur (1) se trouve dans sa position de réglage la plus basse.

2. Dossier selon la revendication 1, caractérisé en ce que la longueur du prolongement (20) de la partie de dossier inférieur (2) et la profondeur de l'évidement (10) de la partie de dossier supérieur (1) correspondant approximativement à la course de réglage en hauteur maximum prévue.

3. Dossier selon la revendication 1 ou 2, caractérisé en ce que la partie de dossier supérieur (1) et la partie de dossier inférieur (2), sont en liaisons entres elles par l'intermédiaire de tiges de guidage (5) et en ce que dans la partie de dossier inférieur (2) sont disposés des moyens de déplacement (23, 24, 25) et des moyens de guidage (50) pour le réglage en hauteur de la partie de dossier supérieur (1).

4. Dossier selon au moins l'une des revendications précédentes, caractérisé en ce que les tiges de guidage (5) sont conçues avec un cintrage concave dans la direction de l'utilisateur, de sorte que la partie de dossier supérieur (1) exécute lors de son déplacement, un mouvement autour d'un point central fictif.

5. Dossier selon au moins l'une des revendications précédentes, caractérisé en ce qu'au niveau du repose épaules (1b) de la partie de dossier supérieur (1) est disposé un axe de pivotement (100), qui se trouve en liaison avec un mécanisme (13) pour réaliser un mouvement pivotant.

6. Dossier selon au moins l'une des revendications précédentes, caractérisé en ce qu'une partie (1') du dossier est construite sous forme de module fonctionnel préréglable, qui présente un châssis (20', 21', 22'), montable séparément, obturant la partie de dossier inférieur (2) vers le haut, des moyens de déplacement (23, 24, 25, 240), des moyens de guidage (50) ainsi que les tiges guidées dans celui-ci (5) pour le réglage en hauteur avec un châssis (14) pour la partie supérieure de dossier (1), avec les moyens de déplacement correspondants (11, 12, 13).

7. Dossier selon la revendication (6), caractérisé en ce que le réglage en hauteur est conçu sous forme de mécanisme à crémaillère, la crémaillère (23) étant en liaison fixe par l'intermédiaire d'une entretoise transversale (51), avec les tiges de guidage (5) et pendant le mouvement de réglage, pénètre dans la zone intérieure du prolongement (20) de la partie de dossier inférieur (2), et en ce que l'unité de motoréducteur (25, 24, 240) est fixée à demeure sur le châssis (21').

8. Dossier selon la revendication (6), caractérisé en ce que le réglage en hauteur est conçu sous forme de réducteur à broche, au moins une broche étant en liaison fixe avec les tiges de guidage étant actionnées par une unité de motoréducteur logée à demeure sur le châssis.
